# EUROPÄISCHE PATENTSCHRIFT

(11) **EP 0 489 321 B1**
(45) Veröffentlichungstag und Bekanntmachung des Hinweises auf die Patenterteilung: **31.01.1996**
(21) Anmeldenummer: 91120003.8
(22) Anmeldetag: 23.11.1991
(51) Int. Cl.: C08L 71/12, C08L 25/00, C08K 5/49, C08L 25/02, C08L 25/06, C08L 51/04

(54) **Kontinuierliches Verfahren zur Herstellung von flammgeschützten halogenfreien thermoplastischen Formmassen**
Continuous process for the preparation of fire-resistant, halogen-free, thermoplastic moulding masses
Procédé de préparation en continu de masse de moulage thermoplastique ignifuge ne contenant pas d'halogènes

(30) Priorität: 01.12.1990 DE 4038431
(43) Veröffentlichungstag der Anmeldung: 10.06.1992
(73) Patentinhaber: BASF Aktiengesellschaft, D-67063 Ludwigshafen (DE)
(72) Erfinder: Ostermayer, Bertram, Dr., W-6900 Heidelberg (DE); Ohlig, Hilmar, W-6750 Kaiserslautern (DE); Benker, Klaus, W-6730 Neustadt (DE); Hofmann, Juergen, W-6700 Ludwigshafen (DE)

(56) Entgegenhaltungen:
- DE-A- 3 711 683

## Beschreibung

Die Erfindung betrifft ein kontinuierliches Verfahren zur Herstellung von flammgeschützten, halogenfreien thermoplastischen Formmassen auf der Basis von Polyphenylenethern und vinylaromatischen Polymeren in einem Extruder.

Die Flammfestausrüstung von thermoplastischen Formmassen auf der Basis von Polyphenylenethern und vinylaromatischen Polymeren ist Gegenstand zahlreicher Druckschriften.

Aufgrund der korrosiv wirkenden Verbrennungsgase bei Einsatz von halogenhaltigen Substanzen sind halogenfreie selbstverlöschende Formmassen erstrebenswert. Es ist bekannt, daß thermoplastische Formmassen, bestehend aus Styrolpolymerisaten und Polyphenylenethern, unter Verwendung von organischen Phosphorverbindungen flammfest ausgerüstet werden können. So wird z.B. in der DE-OS 2 546 621 die Verwendung von Triarylphosphaten, wie Triphenylphosphat, beschrieben.

Die US-PS 4 278 588 beschreibt den Einsatz von Phosphinoxiden, wie Triphenylphosphinoxid, für die Flammfestmachung von Polymermischungen aus Polyphenylenethern und Styrolpolymerisaten.

Die US-PS 4 255 324 hat Mischungen aus Phosphinoxiden und Phosphonaten insbesondere cyclische Phosphonate, für diesen Zweck zum Gegenstand. In der JP-OS 52 041 und EP-A-311 909 sind Verbesserungen der Flammschutzeigenschaften eines mit Butadien-Styrol-Copolymer modifizierten Polyphenylenethers durch Zusatz von Triazinderivaten beschrieben.

Die DE-OS 3 401 835 beinhaltet die halogenfreie Brandschutzausrüstung von thermoplastischen Formmassen auf Basis eines "Dreier-systems", bestehend aus Phenol/Aldehyd-Harz, einer Stickstoff-enthaltenden organischen Verbindung sowie aus einer Phosphor enthaltenden organischen Verbindung, wobei die Verbindungen bevorzugt im Verhältnis 1:1:1 und vorzugsweise für die Ausrüstung von Polymeren, die in der Matrix schon Stickstoff aufweisen, wie SAN, eingesetzt werden.

Weitere phosphorhaltige organische Flammschutzmittel und deren Kombinationen sind aus den DE-A 30 19 617, DE-A 30 02 792 und DE-A 37 11 683 bekannt.

Die aus dem Stand der Technik bekannten thermoplastischen Formmassen werden zur Herstellung von Formkörpern derart verarbeitet, daß alle Komponenten gemeinsam in einem Schritt gemischt und anschließend konfektioniert werden. Es wurde angestrebt, die mechanischen Eigenschaften sowie Flammschutzeigenschaften der Formkörper über die Veränderungen der Komponenten (Mischungsverhältnisse, Einsatz bestimmter Copolymerisate, Synergisten etc.) zu verbessern.

Nachteilig hierbei ist, daß die Zusammensetzungen der jeweiligen Formmassen für entsprechende Anwendungen jeweils zu verändern sind. Zudem ist bei konventioneller Einarbeitung der eingesetzten Flammschutzmittel eine homogene Durchmischung aller Komponenten oft nicht gewährleistet, da die Schmelzpunkte der Thermoplasten und des Flammschutzmittels zu unterschiedlich sind. Insbesondere bei langen Verweilzeiten im Extruder, führt die konventionelle Arbeitsweise zu chemischen Veränderungen und Zersetzungen des Flammschutzmittels.

Der vorliegenden Erfindung lag daher die Aufgabe zugrunde, die geschilderten Nachteile zu beheben und ein Herstellverfahren zur Verfügung zu stellen, welches zu verbesserten mechanischen und flammresistenten Formkörpern aus diesen Formmassen führt.

Insbesondere soll das Herstellverfahren auf einfache technische Weise durchführbar sein, wobei die Verfahrensweise weitestgehend unabhängig von Art und Menge der eingesetzten Komponenten der Formmassen sein soll.

Diese Aufgabe wird erfindungsgemäß durch ein Verfahren gemäß Anspruch 1 gelöst.

Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise, d.h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens zwei, vorzugsweise drei und ggf. auch in mehr Zonen unterteilt.

Nach dem erfindungsgemäßen Verfahren wird zunächst in einer ersten Zone des Extruders durch Umsetzung von
A) 10 - 93 Gew.% eines Polyphenylenethers,
B) 5 - 85 Gew.% eines vinylaromatischen Polymeren und
C) 0 - 40 Gew.% Zusatzstoffe und Verarbeitungshilfsmittel
wobei sich die Angaben in Gewichtsprozent auf das Gesamtgewicht der Komponenten A) bis D) beziehen, bei Temperaturen von 220 bis 350°C, vorzugsweise von 240 bis 330°C und Reaktionszeiten (mittlere Verweilzeiten im Extruder) von 0,1 bis 15 min, vorzugsweise 0,1 bis 10 min und insbesondere 0,5 bis 3 min eine homogene Polymerschmelze hergestellt.

Die erste Zone des Extruders, in der der Polyphenylenether erhitzt wird, weist vorzugsweise eine Länge von 3,5 bis 30, bevorzugt 10 bis 25 D (D = Durchmesser der Schnecke) auf.

In der Nähe der Dosieröffnung in der ersten Zone sind an der Schnecke bevorzugt Förderelemente angebracht, im weiteren Verlauf können sich auch Knetelemente befinden. Am Ende der ersten Zone ist besonders bevorzugt mindestens ein rückförderndens Element vorhanden, mit dem die Verweilzeit in der ersten Zone beeinflußt werden kann.

Bei der Komponente A) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und 0. Olabisi, Polymer-Polymer Miscibility, 1979, S. 117 bis 189).

Der Anteil der Komponente A), bezogen auf die Summe der Komponenten A) bis E) beträgt 10 bis 93, vorzugsweise 15 bis 85, insbesondere 20 bis 78 Gew.% und ganz besonders 35 bis 60 Gew.-%.

Die eingesetzten Polyphenylenether weisen im allgemeinen ein Molekulargewicht (Gewichtsmittelwert) im Bereich von 10.000 bis 80.000, vorzugsweise von 20.000 bis 60.000 auf (gemessen in Chloroform bei 25°C).

Nur beispielsweise seien hier einige Polyphenylenether aufgeführt, wie sie u.a. in O. Olabisi, l.c., S. 224 bis 230 und 245 genannt werden, wie Poly-(2,6-diethyl-1-phenylen)-ether, Poly(2-methyl-6-ethyl-1,4-phenylenether), Poly(2-methyl-6-propyl-1,4-phenylenether), Poly-(2,6-dipropyl-1,4-phenylenether), Poly(2-ethyl-6-propyl-1,4-phenylenether), bevorzugt Poly-(2,6-dimethyl-1,4-phenylenether) oder Copolymere, wie solche, die Einheiten von 2,3,6-.Trimethylphenol enthalten, außerdem Polymermischungen. Besonders bevorzugt ist jedoch Poly(2,6-dimethyl-1,4-phenylenether).

Die Komponente B), welche beim Erhitzen des Polyphenylenethers zugegeben wird, ist ein vinylaromatisches Polymer, das vorzugsweise mit dem eingesetzten Polyphenylenether verträglich ist.

Der Anteil der Komponente B), bezogen auf die Summe der Komponenten A) bis D), beträgt 5 bis 85, vorzugsweise 11 bis 80, insbesondere 18 bis 70 und ganz besonders 35 bis 60 Gew.-%.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen.

Es kommen sowohl Mono- als auch Copolymerisate von vinylaromatischen Monomeren mit 8 bis 12 C-Atomen in Betracht.

Als Beispiele seien Chlorstyrol, α-Methylstyrol, Styrol, p-Methylstyrol, Vinyltoluol und p-tert.-Butylstyrol genannt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts M_{w} von 100 bis 300 000 aufweisen, die nach üblichen Methoden bestimmt werden können.

Als Comonomere zur Herstellung von Copolymerisaten kommen z.B. (Meth)-acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 - 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes (M_{w}) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20°C besitzen. Es können aber auch Acrylatkautschuke, EPDM-, Polybutylen- und Polyoctenamerkautschuke eingesetzt werden.

Als Komponente C) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 30 Gew.%, bezogen auf das Gesamtgewicht der Komponente A) bis D).

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Antioxidationsmittel besonders bevorzugt ist.

Als Pigmente kommen z.B. in Frage TiO₂ und Rupe.

Bei Verwendung von TiO₂ liegt die mittlere Teilchengröpe im Bereich von 50 - 400 nm, insbesondere 150 - 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Als Rupe sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengröpen liegen vorzugsweise im Bereich von 0,01 bis 0,1 µm und die Oberflächen im Bereich von 10 bis 10⁴ m/g (BET/ASTM D 3037) bei DBP-Absorptionen von 10 bis 10³ ml/100 g (ASTM d 2414).

Bevorzugte Triazinderivate sind Melamin oder Melaminsalze. Beispiele sind Melamincyanurat, Melaminoxalat, Melaminphosphat, Melaminborat und Melaminstearat.

Über Art und Menge dieser Zusatzstoffe lassen sich die gewünschten Eigenschaften der Endprodukte in weitem Maße steuern.

Es ist deshalb vorteilhaft, insbesondere bei faserförmigen Verstärkungsstoffen, diese in der 1. Zone mit dem PPE zu einer homogenen Polymerschmelze zu verarbeiten.

Zu den Komponenten A) und B) sowie gegebenenfalls C) werden in mindestens einer weiteren Zone
D) 2 - 40 Gew.-% einer phosphorhaltigen Verbindung über eine oder über mehrere Einspeiseöffnungen in verschiedenen Zonen zugegeben.

Bevorzugt erfolgt die Dosierung mit einem Seitenextruder mit temperierbarem Mantel, in den die Komponente D) eindosiert, aufgeschmolzen und dem Anfang der zweiten Zone des Extruders zugeführt wird.

Im allgemeinen ist der Schneckendurchmesser des Seitenextruders geringer als der des Hauptextruders und die Schneckenlänge liegt im Bereich von 5 bis 40 D, vorzugsweise von 10 bis 20 D. Die Temperatur bei der Dosierung in den Hauptextruder liegt im Bereich von 80 bis 220°C, vorzugsweise von 100 bis 200°C. Die Schnecke des Seitenextruders kann so gestaltet sein, daß die Komponenten vor der Dosierung in den Hauptextruder bereits vorgemischt sind. Vorzugsweise werden die Komponenten in Seitenextruder aufgeschmolzen.

Die Zone des Hauptextruders, in denen dann die erhitzten Komponenten A) bis C) mit den aus dem Beginn der zweiten Zone zudosierten Komponente D) abgemischt werden, hat im allgemeinen eine Länge von 5 bis 40 D, vorzugsweise von 10 bis 20 D. Die Temperatur liegt im Bereich von 180°C bis 350°C, vorzugsweise von 200 bis 320 und insbesondere 220 bis 300 Die mittleren Verweilzeiten in dieser Zone betragen im allgemeinen 0,1 bis 5, vorzugsweise 0,5 bis 3 min.

In manchen Fällen ist es vorteilhaft, nicht die gesamte Menge der Komponente D) gleichzeitig dem Hauptextruder zuzuführen. In diesem Fall können sich an die zweite Zone des Hauptextruders noch eine oder mehrere gleich aufgebaute Zonen anschließen, in die über Einspeiseöffnungen die Komponenten B - F zugegeben werden können. Auch in diesen Fällen erfolgt die Dosierung in den Hauptextruder über Seitenextruder, deren Aufbau der vorstehend beschriebenen Form entspricht, oder bei Füllstoffen, wie Glasfasern über eine oberseitige Öffnung. Es können auch noch Substanzen zugepumpt werden.

Aufbau und Abmessungen der weiteren Zonen des Hauptextruders, in die Komponenten eingeführt werden, entsprechen den Daten der zweiten Zone.

Nachfolgend wird die Komponente D), die dem PPE/HIPS über eine oder mehrere Einspeiseöffnungen zudosiert werden kann, beschrieben.

Die Komponente D) wird in Mengen von 2 bis 40, bevorzugt 4 bis 30, insbesondere 4 bis 25 und ganz besonders 5 bis 20 Gew.-%, bezogen auf 100 Gew.-% der Summe aus A) bis D), eingesetzt.

Bei der Komponente D) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganschen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid. Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkylund arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäuren wie z.B. Poly[natrium(I)-methylphenylphosphinat] eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl-und Vinylphosphonsäuredichlorid mit bifunktionellen Phenolen, wie z.B. Hydrochinon, Resorcin, 2,3,5-Trimethylhydrochinon, Bis-phenol-A, Tetramethylbisphenol-A oder entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19, wobei diese Verbindungen allein oder in beliebigen Mischungsverhältnissen zugesetzt werden können.

Der Schmelzpunkt der Komponente 0) beträgt im allgemeinen 30 bis 220°C, bevorzugt 35 bis 200°C und insbesondere 40 bis 180°C.

Nach der Zugabe aller Komponenten und deren Abmischung in den verschiedenen erwähnten Zonen des Hauptextruders kann vorteilhaft in einer weiteren Zone eine Entgasung durchgeführt werden. Geeignete apparative Ausführungsformen solcher Entgasungszonen sind an sich bekannt. Die Länge dieser Zone beträgt vorzugsweise von 3 bis 10 D, die Temperatur liegt im Bereich von 250 bis 300°C. Bevorzugt wird die Entgasung durch Anlegen eines Vakuums unterstützt.

Nach der Entgasung wird die nach dem Verfahren hergestellte Mischung aus dem Extruder ausgetragen und anschließend in an sich bekannter Weise weiterverarbeitet.

Die nach dem erfindungsgemäßen Verfahren erhaltenen Produkte zeichnen sich durch eine hohe Schlagzähigkeit und gute Fließfähigkeit aus. Insbesondere weisen daraus herstellbare Formkörper eine gute Flammresistenz bei gleichzeitig guter Schlagzähigkeit auf.

### Beispiele

Zur Durchführung des Verfahrens wurde ein Zweischneckenextruder mit drei Zonen eingesetzt (Fa: Werner und Pfleiderer). Der Schneckendurchmesser betrug 53 mm. Die Längen der einzelnen Zonen sind als Vielfaches des Schneckendurchmessers (D) angegeben.

Die erste Zone des Extruders war 15 D lang und hatte am Anfang eine Einspeiseöffnung für feste Substanzen A) bis C). Diese Substanzen wurden über Dosierwaagen zugeführt. Unter der Einspeiseöffnung waren die Schneckenelemente förderwirksam ausgestaltet, dieser Zonenteil (3D) wurde gekühlt auf 20°C. Der nächste Zonenteil (3D) wurde auf 240°C erhitzt. Der Rest der ersten Zone (9 D) hatte eine Temperatur von 280°C. Im mittleren Teil der ersten Zone befanden sich Knetelemente auf der Schnecke. Am Ende der Schnecke war ein zurückförderndes Element eingebaut.

Die zweite Zone des Extruders war 15 D lang und hatte am Anfang seitlich eine Einspeiseöffnung. Der Rest der zweiten Zone war außerdem zur Entgasungszone hin geschlossen. Die Komponente D) und E) wurden durch die seitliche Einspeiseöffnung in die zweite Zone mit einem Seitenextruder zugeführt. Die zweite Zone wurde auf 285°C erhitzt. Die Schnecke trug Knetelemente.

Der Seitenextruder war ein Zweischneckenextruder mit einem Schneckendurchmesser von 30mm und 17 D Länge. Die erste Zone wurde auf 20°C gekühlt, die zweite Zone wurde je nach Erweichungspunkt des Flammschutzmittels auf 100 - 240°C geheizt. Am Anfang des Seitenextruders wurden die Substanzen durch Dosierwaagen zugeführt und am Ende des Seitenextruders in die seitliche Einspeiseöffnung der zweiten Zone zugeführt.

Die Entgasungszone des Extruders war 6 D lang und hatte am Anfang eine Entgasungsöffnung an die ein Vakuum von 100 Torr angelegt wurde. Im zweiten Teil der Entgasungszone wurde ein Druck aufgebaut und das Produkt über eine Lochdüse auszutragen. Das Produkt wurde durch ein Wasserbad gezogen und anschließend granuliert und getrocknet.

Im einzelnen wurden folgende Komponenten eingesetzt:
A1) Poly-(2,6-dimethyl-1,4-phenylen)-ether mit einem mittleren Molekulargewicht (M_{w}) von 40 000.
A2) Poly-(2,6-dimethyl-1,4-phenylen)-ether mit einem mittleren Molekulargewicht (M_{w}) von 50 000.
B1) Schlagfestes Polystyrol mit einem Polybutadiengehalt von 8 Gew.%
B2) Schlagfestes Polystyrol mit einem Polybutadiengehalt von 10 Gew.%
B3) Schlagfestes Polystyrol mit einem Polybutadiengehalt von 6 Gew.%
B4) Schlagfestes Polystyrol mit einem Polybutadiengehalt von 4 Gew.%
C1) Trisnonylphenylphosphit
C2) Polyethylenwachs (M_{w} = 5000)
D1) Triphenylphosphinoxid (Schmelzpunkt: 150°C)
D2) Triphenylphosphat (Schmelzpunkt: 55°C)
D3) Bis(diphenylphosphinat) des Hydrochinons (Schmelzpunkt: 98°C)

### Vergleichsbeispiele

Die Komponente A) bis D) wurden entsprechend der Zusammensetzung in den erfindungsgemäßen Beispielen alle zusammen in die 1. Zone des Hauptextruders dosiert und auf dem Hauptextruder abgemischt.

Die Zusammensetzung der Formmassen sind der Tabelle 1 zu entnehmen.

Die in den Beispielen und Vergleichsversuchen beschriebenen Parameter wurden wie folgt bestimmt:

### 1. UL 94

Die Flammschutzprüfung erfolgte im vertikalen Brandschutztest an 1,6 mm Teststäbchen nach den Vorschriften der Underwriter Laboratories zwecks Einordnung in eine der Brandklassen UL-94 V-O, UL-94 V-1 oder UL-94 V-2.

Die Einstufung eines flammgeschützten Thermoplasten in die Brandklasse UL-94 V-0 erfolgt, wenn folgende Kriterien erfüllt sind:

Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nicht länger als 60 Sek. dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

### 2. Kerbschlagzähigkeit.

Diese wurde nach DIN 53453 an Normkleinstätchen ermittelt.

Die Ergebnisse der Messungen sind der Tabelle 2 zu entnehmen.

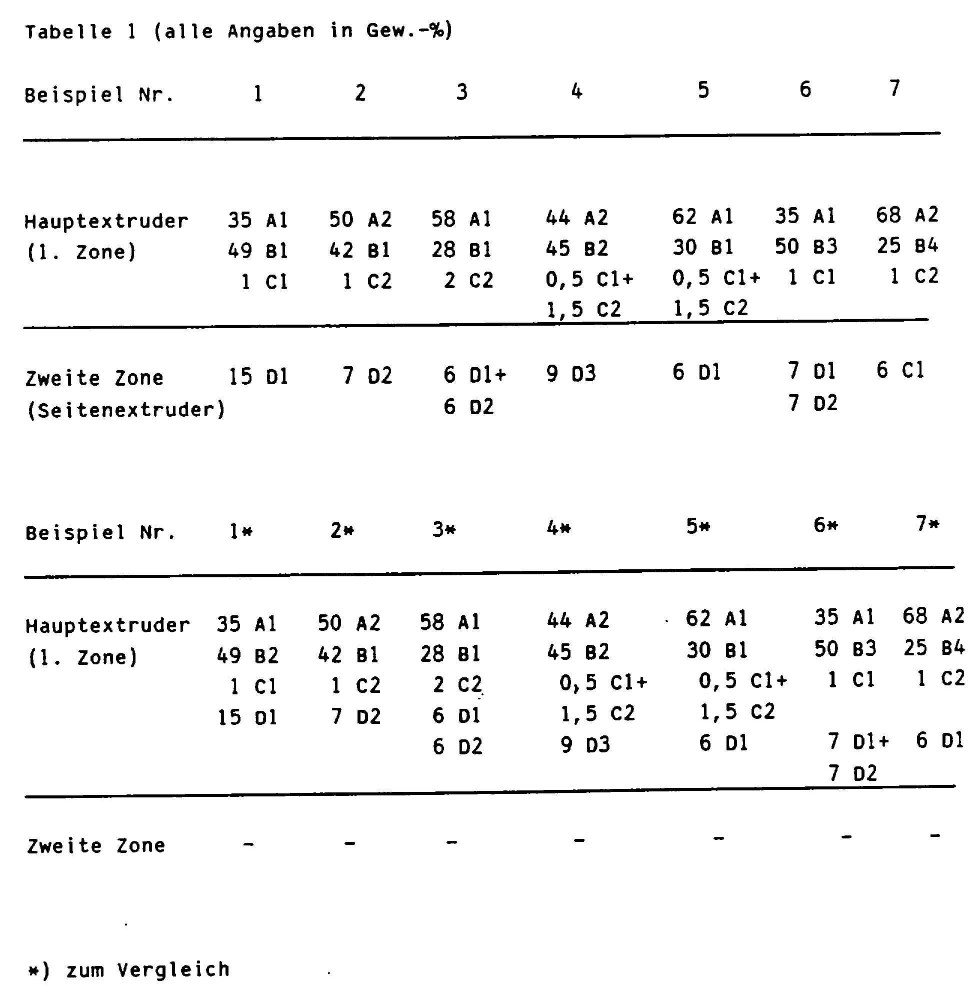

**Tabelle 2**

| Beispiele | | | | | | | |
|---|---|---|---|---|---|---|---|
| Nr. | 1 | 2 | 3 | 4 | 5 | 6 | 7 |
| Kerbschlagzähigkeit [kJ/m] 23°C | 9,5 | 11,0 | 12,3 | 10,3 | 13 | 7 | 11,3 |
| Brandverhalten | V0 | V1 | V0 | V1 | V0 | V0 | V0 |
| nicht brennendes Abtropfen | nein | nein | nein | nein | nein | nein | nein |

| Vergleichsbeispiele | | | | | | | |
|---|---|---|---|---|---|---|---|
| Nr. | 1* | 2* | 3* | 4* | 5* | 6* | 7* |
| Kerbschlagzähigkeit [kJ/m] 23°C | 8,2 | 10,2 | 10,8 | 9,1 | 10,2 | 7,1 | 11,1 |
| Brandverhalten | V1 | V2 | V1 | V2 | V1 | V2 | V1 |
| nicht brennendes Abtropfen | nein | ja | nein | ja | nein | ja | nein |

Die Ergebnisse der Messungen zeigen, daß bei gleichem Weichkomponentenanteil bessere Flammschutzeigenschaften erzielt werden und bei einer Erhöhung des Kautschukgehaltes die thermische Schädigung durch relativ lange Verweilzeiten im Extruder geringer als erwartet ist, bei gleichzeitig verbesserter Flammresistenz der Formkörper.

## Patentansprüche

1. Kontinuierliches Verfahren zur Herstellung von flammgeschützten, halogenfreien thermoplastischen Formmassen auf der Basis von Polyphenylenethern und vinylaromatischen Polymeren in einem Extruder, dadurch gekennzeichnet, daß man
I) in einer ersten Zone bei Temperaturen von 220°C bis 350°C
A) 10 - 93 Gew.% eines Polyphenylenethers,
B) 5 - 85 Gew.% eines vinylaromatischen Polymeren
C) 0 - 40 Gew.% Zusatzstoffe und Verarbeitungshilfsmittel,
wobei sich die Angaben in Gewichtsprozent auf das Gesamtgewicht der Komponenten A) bis D) beziehen, über einen Zeitraum von 0,1 bis 15 min erhitzt, und eine homogene Polymerschmelze herstellt, und
II) anschließend in mindestens einer weiteren Zone des Extruders bei 180°C bis 350°C
D) 2 - 40 Gew.% einer phosphorhaltigen Verbindung zusetzt, homogenisiert und die so erhaltene Mischung extrudiert.

2. Verfahren nach Anspruch 1, dadurch gekennzeichnet, daß die Komponente D) einen Schmelzpunkt von 30 bis 220°C aufweist.

3. Verfahren nach den Ansprüchen 1 und 2, dadurch gekennzeichnet, daß man die Mischung der Komponenten A) bis D) in einer weiteren Zone des Extruders entgast.

4. Verfahren nach den Ansprüchen 1 bis 3, dadurch gekennzeichnet, daß die Komponente B) aus einem schlagzähmodifizierten Polystyrol mit einem Kautschukgehalt von 3 bis 20 Gew.-%, bezogen auf B), aufgebaut ist.

5. Verfahren nach den Ansprüchen 1 bis 4, dadurch gekennzeichnet, daß die phosphorhaltige Verbindung D) aus Triphenylphosphinoxid oder Triphenylphosphat oder deren Mischungen besteht.

6. Verfahren nach den Ansprüchen 1 bis 5, dadurch gekennzeichnet, daß die phosphorhaltige Verbindung D) das Bisdiphenylphosphinat des Hydrochinons ist.

7. Thermoplastische Formmassen, erhältlich nach dem Verfahren gemäß den Ansprüchen 1 bis 6, welche im wesentlichen aus den Komponenten A), B), C) und D) bestehen und bei einem Gehalt von 10 Gew-% B), bezogen auf die Summe von A) bis D) eine Kerbschlagzähigkeit bei 23°C von mindestens 7 kJ/m2 aufweisen.

## Claims

1. A continuous process for the preparation of flameproofed, halogen-free thermoplastic molding materials based on polyphenylene ethers and vinylaromatic polymers in an extruder, which comprises
I) heating, in a first zone at from 220°C to 350°C,
A) from 10 to 93% by weight of a polyphenylene ether,
B) from 5 to 85% by weight of a vinylaromatic polymer and
C) from 0 to 40% by weight of additives and processing assistants,
the data in percent by weight being based on the total weight of components A) to D), for from 0.1 to 15 minutes, giving a homogeneous polymer melt, and
II) subsequently adding, in at least one further zone of the extruder, at from 180°C to 350°C,
D) from 2 to 40% by weight of a phosphorus-containing compound,
homogenizing the mixture and extruding the resultant material.

2. A process as claimed in claim 1, wherein component D) has a melting point of from 30 to 220°C.

3. A process as claimed in claim 1 or 2, wherein the mixture of components A) to D) is degassed in a further zone of the extruder.

4. A process as claimed in claim 1 or 2 or 3, wherein component B) is built up from an impact-modified polystyrene having a rubber content of from 3 to 20% by weight, based on B).

5. A process as claimed in claim 1 or 2 or 3 or 4, wherein the phosphorus-containing compound D) comprises triphenylphosphine oxide or triphenyl phosphate or a mixture thereof.

6. A process as claimed in claim 1 or 2 or 3 or 4 or 5, wherein the phosphorus-containing compound D) is the bisdiphenylphosphinate of hydroquinone.

7. A thermoplastic molding material obtainable by a process as claimed in claim 1 or 2 or 3 or 4 or 5 or 6 and essentially comprising components A), B), C) and D) and, at a B) content of 10% by weight, based on the sum of A) to D), has a notched impact strength at 23°C of at least 7 kJ/m.

## Revendications

1. Procédé continu de préparation, dans une extrudeuse, de masses à mouler thermoplastiques ignifugées, ne contenant pas d'halogènes, à base de poly(oxyphénylène) et de polymères vinylaromatiques, caractérisé en ce que
I) dans une première zone à une température de 220 à 350°C, on chauffe pendant un temps de 0,1 à 15 min
A) 10 - 93% en poids d'un poly(oxyphénylène),
B) 5 - 85% en poids d'un polymère vinylaromatique,
C) 0 - 40% en poids d'additifs et de produits auxiliaires de transformation,
les pourcentages en poids se rapportant au poids total des composants A) à D), et on prépare une masse fondue homogène de polymères, et ensuite
II) dans au moins une autre zone de l'extrudeuse à une température de 180 à 350°C, on ajoute
D) 2 - 40% en poids d'un composé phosphoré, on homogénéise et on extrude le mélange ainsi obtenu.

2. Procédé selon la revendication 1, caractérisé en ce que le composant D) présente un point de fusion de 30 à 220°C.

3. Procédé selon la revendication 1 ou 2, caractérisé en ce que l'on dégaze le mélange des composants A) à D) dans une autre zone de l'extrudeuse.

4. Procédé selon l'une quelconque des revendications 1 à 3, caractérisé en ce que le composant B) est constitué par un polystyrène modifié dans le sens de la résilience, ayant une teneur en caoutchouc de 3 à 20% en poids par rapport à B).

5. Procédé selon l'une quelconque des revendications 1 à 4, caractérisé en ce que le composé phosphoré D) est constitué par de l'oxyde de triphénylphosphine, du phosphate de triphényle ou des mélanges de ceux-ci.

6. Procédé selon l'une quelconque des revendications 1 à 5, caractérisé en ce que le composé phosphoré D) est le bisdiphénylphosphinate de l'hydroquinone.

7. Masses à mouler thermoplastiques qui sont obtenues par le procédé selon l'une quelconque des revendications 1 à 6, se composent essentiellement des composants A), B), C) et D) et présentent, avec une teneur en B) de 10% en poids par rapport à la somme de A) à D), une résistance au choc sur barreau entaillé à 23°C d'au moins 7 kJ/m.
